# EUROPÄISCHE PATENTANMELDUNG

(11) **EP 4 790 329 A1**
(43) Veröffentlichungstag der Anmeldung: **12.08.2026**
(21) Anmeldenummer: 26153314.5
(22) Anmeldetag: 21.01.2026
(51) Int. Cl.: F24H 1/14, F24H 9/1818, H05B 3/20

(54) **HEIZVORRICHTUNG FÜR WASSER UND WASSERFÜHRENDES HAUSHALTSGERÄT MIT EINER SOLCHEN HEIZVORRICHTUNG**

(30) Priorität: 06.02.2025 DE 102025104445
(71) Anmelder: E.G.O. Elektro-Gerätebau GmbH, 75038 Oberderdingen (DE)
(72) Erfinder: Albert, Tobias, 76703 Kraichtal (DE); Striz, Philipp, 76703 Kraichtal (DE); Eigl, Sebastian, 75015 Bretten (DE)
(74) Vertreter: Patentanwälte Ruff, Wilhelm, Beier, Dauster & Partner mbB

(57) **Zusammenfassung**

Eine Heizvorrichtung für Wasser weist einen Wasserkanalkörper mit einem länglichen Wasserkanal darin auf, der nur durch einen Kanalzulauf und einen Kanalablauf zugänglich ist. An einer Außenfläche des Wasserkanalkörpers ist eine Beheizung angeordnet. Der Wasserkanalkörper ist als rechteckige Platte mit einem Außenrand ausgebildet. Der Wasserkanal verläuft in Bahnen und weist an einem Ende den Kanalzulauf und an einem anderen Ende den Kanalablauf auf, wobei der Kanalzulauf und der Kanalablauf an einem Randbereich des Wasserkanalkörpers nahe dessen Außenrand angeordnet sind. Am Kanalzulauf beginnt eine äußere Bahn des Wasserkanals, die entlang von zwei Außenrändern des Wasserkanalkörpers zwischen dem Außenrand des Wasserkanalkörpers und den übrigen Bahnen des Wasserkanals verläuft, damit hier eintretendes kaltes Wasser den Außenrand bzw. Randbereich des Wasserkanalkörpers kühlt.

## Beschreibung

### ANWENDUNGSGEBIET UND STAND DER TECHNIK

Die Erfindung betrifft eine Heizvorrichtung für Wasser, insbesondere für ein wasserführendes Haushaltsgerät mit einer Wasserführung. Des Weiteren betrifft die Erfindung ein wasserführendes Haushaltsgerät mit einer solchen Heizvorrichtung.

Derartige Heizvorrichtungen und damit versehene Haushaltsgeräte sind aus dem Stand der Technik bekannt, siehe beispielsweise die EP 1 975 517 A1. Mit dieser kann ein praxistauglicher Aufbau erreicht werden sowie eine gute Möglichkeit geschaffen werden, heißes Wasser zu erzeugen.

Bei dieser Heizvorrichtung ist es nicht nur wichtig, einerseits möglichst schnell und/oder möglichst viel heißes Wasser zu erzeugen, wofür ein schnelles und/oder starkes Aufheizen durch ein Heizelement vorteilhaft ist, sondern auch eine Betriebssicherheit sowie ein Überhitzen der Heizvorrichtung bzw. des Heizelements zu vermeiden.

### AUFGABE UND LÖSUNG

Der Erfindung liegt die Aufgabe zugrunde, eine eingangs genannte Heizvorrichtung sowie ein wasserführendes Haushaltsgerät zu schaffen, mit denen Probleme des Standes der Technik gelöst werden können und es insbesondere möglich ist, heißes Wasser möglichst schnell und sicher erzeugen zu können.

Gelöst wird diese Aufgabe durch eine Heizvorrichtung mit den Merkmalen des Anspruchs 1 sowie durch ein wasserführendes Haushaltsgerät mit den Merkmalen des Anspruchs 15. Vorteilhafte sowie bevorzugte Ausgestaltungen der Erfindung sind Gegenstand der weiteren Ansprüche und werden im Folgenden näher erläutert. Dabei werden manche Merkmale nur für die Heizvorrichtung oder nur für das Haushaltsgerät beschrieben. Sie sollen jedoch unabhängig davon sowohl für eine solche Heizvorrichtung als auch für ein damit versehenes Haushaltsgerät selbständig und unabhängig voneinander gelten können. Der Wortlaut der Ansprüche wird durch ausdrückliche Bezugnahme zum Inhalt der Beschreibung gemacht.

Die Heizvorrichtung, mit der Wasser erwärmt bzw. erhitzt werden soll und unter Umständen sogar dabei Dampf erzeugt werden soll, weist einen Wasserkanalkörper mit mindestens einem länglichen Wasserkanal darin bzw. daran auf. Der Wasserkanalkörper ist als im Wesentlichen oder genau rechteckig geformte Platte mit einem Außenrand ausgebildet, vorzugsweise mit geringer Dicke relativ zu der Länge der Außenränder. Er kann gewölbt ausgebildet sein, dies muss aber nicht sein. Vorteilhaft ist der Wasserkanal im Wasserkanalkörper bei der Fertigung zuerst offen, wird aber später bei der fertigen Heizvorrichtung verschlossen sein. Der Wasserkanal kann durch eine längliche und durchgehende Vertiefung in dem Wasserkanalkörper gebildet sein. Nach außen ist er, insbesondere im fertig montierten Zustand der Heizvorrichtung bzw. im betriebsfertigen Zustand, abgedichtet. Er ist durch einen Kanalzulauf und durch einen Kanalablauf zugänglich, wobei diese vorteilhaft an jeweils den beiden Enden in den Wasserkanal münden und einen Zugang bzw. Abgang bilden. Der Wasserkanal verläuft zwischen dem Kanalzulauf und dem Kanalablauf in Bahnen und/oder Schleifen und überdeckt bzw. bildet so eine Wasserkanalfläche bzw. er verläuft in Bahnen über diese Wasserkanalfläche verteilt.

Der Kanalzulauf und der Kanalablauf sind an einem Randbereich der Wasserkanalfläche angeordnet, vorteilhaft nahe deren Außenrand, besonders vorteilhaft mit einem Abstand von 1 mm bis 20 mm. An einer Außenfläche des Wasserkanalkörpers ist eine Beheizung zum Aufheizen von durch den Wasserkanal strömendem Wasser vorgesehen, vorteilhaft an nur einer der beiden Außenflächen.

Erfindungsgemäß bildet der Wasserkanal am Kanalzulauf beginnend eine äußere Bahn als eine Art erste Bahn, die an oder entlang von mindestens zwei Außenrändern des Wasserkanalkörpers verläuft bzw. als äußerste Bahn entlang dieser mindestens zwei Außenränder des Wasserkanalkörpers verläuft. Dabei verläuft sie zwischen dem Außenrand des Wasserkanalkörpers und den übrigen Bahnen des Wasserkanals, schirmt also sozusagen den Außenrand von den übrigen Bahnen des Wasserkanals ab. Dies kann eine kühlende Wirkung haben, so dass kein heißes Wasser, wie es nach einem gewissen Durchfließen des Wasserkanals vorliegt, den Außenrand ungewünscht bzw. zu stark aufheizt. Ebenso kann die Beheizung selbst auch etwas weiter entfernt sein, und auf alle Fälle kann auch deren Wärmequerleitung im Wasserkanalkörper hin zum Außenrand durch die äußerste Bahn mit kälterem Wasser darin reduziert werden oder verhindert werden. Diese äußerste Bahn ist solange die äußerste Bahn, bis eine andere Bahn zwischen ihr und dem Außenrand angeordnet ist bzw. verläuft nd somit weiter außen ist.

Durch etwas geringere Temperaturen am Außenrand des Wasserkanalkörpers, zumindest in Bereichen des Wasserkanalkörpers, kann dieser leichter in der Heizvorrichtung befestigt werden, beispielsweise in einem eigenen Gehäuse oder in einem Gerätegehäuse des Haushaltsgeräts befestigt werden. Ebenso können weitere Funktionseinheiten am Außenrand oder nahe dem Außenrand vor zu hoher Temperatur geschützt werden. Dies ermöglicht beispielsweise überhaupt erst die Verwendung von Kunststoff oder von einfacheren Kunststoffen, die eine geringere Temperaturfestigkeit aufweisen.

**In** Ausbildung der Erfindung verläuft der Randbereich der Wasserkanalfläche bzw. die äußerste Bahn an oder entlang von mindestens drei Außenrändern des Wasserkanalkörpers, und zwar bevorzugt jeweils entlang von mindestens 50% oder von mindestens 80% von deren jeweiliger Außenrandlänge, insbesondere verlaufen sie entlang des Außenrands des Wasserkanalkörpers. Dabei kann die Bahn durchgängig an diesen drei Außenrändern des Wasserkanalkörpers entlang laufen. Vorzugsweise kann dies an allen vier Außenrändern erfolgen, wobei es möglich ist, dass sie an einem vierten Außenrand nur an einem Eckbereich zu dem anderen Außenrand verläuft.

**In** Ausbildung der Erfindung ist die Beheizung an einer nach außen weisenden Außenfläche des Wasserkanalkörpers vorgesehen und angeordnet. Dabei können der mindestens eine Heizleiter oder sämtliche Heizleiter der Beheizung mindestens 50% seiner Fläche bzw. Außenfläche bedecken, vorzugsweise mindestens 70% bis 95% der Außenfläche.

In Ausbildung der Erfindung kann die Wasserkanalfläche entlang von einem Außenrand des Wasserkanalkörpers oder entlang von mindestens zwei Außenrändern des Wasserkanalkörpers die Beheizung bereichsweise überragen in seitlicher Richtung, hier also größer sein. Vorzugsweise kann dies sogar entlang von mindestens drei Außenrändern sein. In den überragenden Bereichen der Wasserkanalfläche kann eine Bahn des Wasserkanals, insbesondere eine einzige Bahn, als äußerste Bahn ohne Überdeckung der Beheizung verlaufen. So kann sie die oben genannte kühlende Wirkung haben.

In weiterer Ausbildung der Erfindung kann der Wasserkanal zumindest bereichsweise mäanderförmig in parallelen Schleifen verlaufen, wobei jede Schleife an ihrem Ende eine Wendung des Wasserkanals um etwa 180° aufweist. Es kann eine mäanderförmige Ausbildung vorgesehen sein, unter Umständen auch Mischformen von bifilar und mäanderförmig. Vorteilhaft kann ein Wasserkanal, vorteilhaft mehr als 50% oder mehr als 80% der Länge des Wasserkanals, insbesondere in zumindest bereichsweise mäanderförmiger Ausbildung, aus Biegungen um 90° oder um 180° und geraden Abschnitten dazwischen bestehen. Besonders vorteilhaft bestehen mehr als 50% oder mehr als 80% des Wasserkanals oder der Wasserkanäle nur aus Biegungen um 90° oder um 180° und geraden Abschnitten dazwischen.

Besonders bevorzugt ist ein einziger Wasserkanal vorgesehen. Er kann relativ lang sein, um darin entlang strömendes Wasser zu erhitzen.

In Ausbildung der Erfindung kann der Wasserkanal derart verlaufen, dass ein direkt zu dem Kanalablauf führender Wasserkanalabschnitt aus dem Mittelbereich des Wasserkanalkörpers heraus kommt bzw. das dort voraussichtlich heißeste Wasser möglichst schnell am Kanalablauf abgeführt werden kann. Des Weiteren kann vorgesehen sein, dass in diesem Mittelbereich des Wasserkanalkörpers die höchsten Temperaturen herrschen, so dass hier auch das heißeste Wasser erhältlich ist.

In Ausbildung der Erfindung kann die Beheizung an einer Außenfläche des Wasserkanalkörpers flächig verteilt sein durch eine weitgehend flächig geschlossene Ausgestaltung mindestens eines Heizleiters oder durch einen eine größere Fläche partiell bedeckenden Verlauf mindestens eines länglichen Heizleiters oder mehrerer paralleler Heizleiter.

In einer ersten Weiterbildung der Erfindung kann die Beheizung durch mindestens einen schmalen und länglichen Heizleiter gebildet sein. Vorzugsweise kann der Heizleiter entlang mindestens eines Wasserkanals und diesem genau gegenüberliegen bzw. darüber verlaufen, allerdings nicht über der äußersten Bahn des Wasserkanals wie zuvor erläutert. So ist eine möglichst direkte und schnelle Beheizung von darin strömendem Wasser möglich.

In einer zweiten Weiterbildung der Erfindung kann die Beheizung durch mindestens einen flächigen und vorteilhaft rechteckig ausgebildeten Heizleiter gebildet sein. Dieser Heizleiter kann entweder durch eine geschlossene Fläche gebildet sein, alternativ kann er eine gitterartige Ausgestaltung aufweisen. Dies ist aus dem Stand der Technik bekannt.

In Ausbildung der Erfindung kann die Beheizung durch mehrere Heizkreise gebildet sein, die vorteilhaft separat und unabhängig voneinander ansteuerbar sein können. So können unterschiedlich hohe und unterschiedlich lokalisierte Beheizungen realisiert werden. Dabei können mehrere Heizkreise im selben Flächenbereich verlaufen, aber nebeneinander. Vor allem schmale längliche Heizleiter können dabei ineinandergreifend ausgebildet sein, beispielsweise auch kammartig oder mäanderförmig ausgebildet.

Grundsätzlich können die Heizleiter verschiedenartig ausgebildet sein, beispielsweise durch Rohrheizkörper, Heizdrähte odgl. gebildet sein. Vorzugsweise sind sie in Dickschichttechnik bzw. als mindestens ein Dickschicht-Heizleiter aus einem entsprechenden Heizleitermaterial ausgebildet. Vorteilhaft können es mehrere schmale Dickschicht-Heizleiter mit einer Anordnung in parallelen Bahnen und/oder mit mäanderförmiger Anordnung sein.

Entsprechend der vorgenannten zweiten Weiterbildung der Erfindung können die Heizleiter überwiegend flächig und rechteckig anstatt schmal und länglich ausgebildet sein. So kann mehr als die Hälfte der Dickschicht-Heizleiter, vorteilhaft mehr als 75 % bezogen auf die Anzahl oder die Fläche aller Heizleiter, eine Breite quer zur Stromflussrichtung aufweisen, die größer ist als eine Länge der Dickschicht-Heizleiter entlang der Stromflussrichtung. Bevorzugt ist die Länge sämtlicher Dickschicht-Heizleiter gleich, ihre Breiten können sich unterscheiden, besonders bevorzugt sogar stark bis um den Faktor 5 bis 15. Dabei können vorteilhaft mehrere Dickschicht-Heizleiter eine durchgehende zusammenhängende Fläche aus Heizleitermaterial aufweisen, und diese Fläche ist durch mindestens eine längliche Kontaktleitung in zwei oder mehr einzelne Dickschicht-Heizleiter unterteilt. Vorteilhaft verlaufen mehrere oder sämtliche Kontaktleitungen parallel zueinander, insbesondere in den Bereichen, wo sie das Heizleitermaterial kontaktieren und so einzelne Heizleiter bilden. Manche der länglichen Kontaktleitungen können auch voll durch eine Fläche aus Heizleitermaterial verlaufen.

Bevorzugt kann der mindestens eine Wasserkanal im Wasserkanalkörper mehr als 50% oder 60% der Fläche des Wasserkanalkörpers bedecken, besonders bevorzugt bis zu 90% oder sogar bis zu 95%, so dass die Wasserkanalfläche relativ groß ist. Dies kann durch einen verteilten Verlauf des Wasserkanals erfolgen. Dadurch ist ein möglichst kompakter Aufbau der Heizvorrichtung möglich bzw. bei vorgegebener Baugröße kann der Wasserkanal möglichst lang sein für eine möglichst gute Beheizung des Wassers.

In Ausbildung der Erfindung können der Kanalzulauf und der Kanalablauf an derselben Fläche nahe dem oder an dem Außenrand des Wasserkanalkörpers angeordnet bzw. an demselben Randbereich nebeneinander angeordnet sein. Dabei verläuft zwischen dem Kanalzulauf und einem an diesen Außenrand angrenzenden weiteren Außenrand kein Wasserkanal. Zwischen dem Kanalablauf und dem anderen an diesen Außenrand angrenzenden weiteren Außenrand können mindestens ein Wasserkanal oder mindestens eine Schleife des Wasserkanals angeordnet sein, die wiederum für eine Kühlung am Außenrand sorgen können wie zuvor erläutert.

In weiterer Ausbildung der Erfindung können der Kanalzulauf und der Kanalablauf durch eine Außenfläche des Wasserkanalkörpers hindurch laufen, insbesondere diejenige Außenfläche, an der der Wasserkanal ausgebildet ist bzw. an der er sich befindet. Dabei können Rohrstutzen als Kanalzulauf und als Kanalablauf vorgesehen sein bzw. die Anschlüsse an den Wasserkanal bilden. Diese Rohrstutzen können an einem Kanalkörperunterteil angesetzt sein und davon abstehen, insbesondere beide gemeinsam an einem Teil als Baueinheit ausgebildet sein. Die Rohrstutzen von Kanalzulauf und Kanalablauf führen zu den Enden des Wasserkanals. Sie können im Wesentlichen rechtwinklig abstehen oder vorteilhaft in Längsrichtung der Heizvorrichtung weisen. Sie können aus demselben Material wie der Wasserkanalkörper bestehen, insbesondere Metall bzw. Edelstahl, und an diesem angeschweißt sein. Vorteilhaft bestehen sie aus Kunststoff und sind ein am Wasserkanalkörper befestigtes Teil, besonders vorteilhaft eben als Baueinheit ausgebildet. Sie können dichtend an dem Kanalzulauf und dem Kanalablauf angedrückt oder eingedrückt sein, vorteilhaft mit Dichtungen, und beispielsweise an den Wasserkanalkörper mit Abstand zu einem Wasserkanal festgeschraubt sein.

In Ausbildung der Erfindung kann der Wasserkanalkörper ein Kanalkörperunterteil und einen darauf aufgebrachten Deckel aufweisen, wobei der Wasserkanal in dem Kanalkörperunterteil als längliche durchgehende Vertiefung ausgebildet ist. Der Deckel kann hier auf das Kanalkörperunterteil aufgesetzt sein und den mindestens einen Wasserkanal überdecken und vorzugsweise entlang seiner Länge abdichten. Dabei weist der Deckel die Beheizung mit dem mindestens einen Heizleiter auf, wobei die Beheizung eben an dem Deckel flächig verteilt ist.

Der mindestens eine Wasserkanal im Wasserkanalkörper bzw. im Kanalkörperunterteil kann durch Einprägen in eine zuvor flache ebene Platine aus Metall ausgebildet sein, dies ist bekannt. Er kann in einem einzigen oder in mehreren Schritten eingeprägt werden, möglicherweise auch durch Tiefziehen. Bis auf einen Randbereich, in dem das Kanalkörperunterteil die Dicke der ursprünglichen Platine aufweisen kann, sollte die Dicke des gesamten Wasserkanalkörpers nur um maximal 10% oder 20% variieren, also in dem Bereich, in dem der Wasserkanal verläuft. Somit ist dieser immer ungefähr oder genau gleich groß.

Die Heizvorrichtung bzw. der Wasserkanalkörper kann bevorzugt gleichmäßig gewölbt ausgebildet sein, insbesondere um eine entlang der Längsachse verlaufende Achse. Dann ist die Länge entlang dieser Achse größer als die Breite quer dazu. Dabei kann die Heizvorrichtung zwischen 20% und 35% des Umfangs eines umlaufenden Rohrs bilden, der Deckel kann ja tatsächlich aus einem solchen herausgeschnitten sein.

In Weiterbildung der Erfindung kann der Wasserkanalkörper in die gewölbte Form gebogen worden sein, oder er ist durch Prägen oder Tiefziehen in dieser gewölbten Form hergestellt worden. Dabei kann der mindestens eine Wasserkanal gleichzeitig, vor oder nach einem Biegen einer ebenen Platine in die gewölbte Form der Platte ausgebildet worden sein, vorteilhaft wird alles in einem einzigen Schritt durchgeführt.

Der Deckel und das Kanalkörperunterteil können die gleiche Fläche und die gleiche Ausdehnung bzw. Form aufweisen, vorzugsweise ist auch die Wölbung gleich bzw. genau dieselbe. Dann passen sie möglichst gut aufeinander und können dicht miteinander verbunden werden.

Bevorzugt sind der Deckel und das Kanalkörperunterteil aus demselben Material hergestellt, insbesondere aus Metall, wobei der Deckel und/oder der Wasserkanalkörper aus Edelstahl bestehen können. Es können aber auch andere bzw. unterschiedliche Materialien verwendet werden, falls dies die Anwendung erlaubt oder fordert.

Alternativ kann mindestens das Kanalkörperunterteil aus Kunststoff bestehen, insbesondere aus Kunststoffspritzguss, vorzugsweise faserverstärkt sein.

Vorteilhaft ist der Deckel mit dem Kanalkörperunterteil dauerhaft und dicht verbunden, insbesondere verschweißt im Fall von Metall oder verklebt. Diese dauerhafte Verbindung kann durchgehend entlang eines Außenrands des Deckels und/oder des Kanalkörperunterteils vorgesehen sein. So dass die Heizvorrichtung nach außen wasserdicht ist. Vorzugsweise können sie zusätzlich auch punktuell in ihrem Flächenbereich miteinander verbunden sein, insbesondere zwischen zwei benachbarten Wasserkanälen. Dann dichtet der Deckel möglichst auch den gesamten Wasserkanal ab.

Alternativ kann der Deckel zwar dicht mit dem Kanalkörperunterteil verbunden sein, aber auch von diesem lösbar sein, insbesondere können sie verschraubt sein. So kann eine Reparatur ermöglicht werden.

Der Deckel kann dünn ausgebildet sein, vorzugsweise aus Flachmaterial mit einer Dicke zwischen 0,5 mm und 2 mm gefertigt sein. Er kann ebenfalls durch Biegen in die gewünschte Form gebracht sein. Alternativ kann er aus einem vollen Rohr als Teilumfang herausgeschnitten sein. Dies bietet sich an, wenn die Heizleiter als Dickschicht-Heizleiter ausgebildet sind, da dann ein Mehrfachnutzen hergestellt werden kann, um dann vereinzelt zu werden.

Eine elektrische Anschlussvorrichtung an die Heizvorrichtung bzw. an die Beheizung ist vorteilhaft an der Außenfläche des Wasserkanalkörpers bzw. des Deckels vorgesehen, insbesondere als daran befestigter Steckanschluss für einen schnellen und einfachen elektrischen Anschluss. Vorteilhaft weist die elektrische Anschlussvorrichtung einen Abstand von mindestens 5 mm oder sogar 10 mm bis zum nächstgelegenen Heizleiter auf. Besonders vorteilhaft kann an mindestens einer Seite der elektrischen Anschlussvorrichtung ein Wasserkanal zwischen dieser Seite und dem nächstgelegenen Heizleiter verlaufen, wobei dieser Wasserkanal nicht über der Beheizung verläuft.

Die elektrische Anschlussvorrichtung ist vorteilhaft nahe einem Außenrand des Wasserkanalkörpers angeordnet, vorzugsweise in einem Eckbereich, an den auch der Außenrand des Wasserkanalkörpers mit dem Kanalzulauf daran angrenzt. Dabei kann ein direkt an den Kanalzulauf anschließender Wasserkanalabschnitt entlang der elektrischen Anschlussvorrichtung und auch ggf. zu nachfolgenden Wasserkanalabschnitten verlaufen, wobei die elektrische Anschlussvorrichtung diesen Wasserkanalabschnitt nicht überdecken sollte.

Zusätzlich zur Beheizung kann ein diskreter Temperatursensor an der Heizvorrichtung vorgesehen sein, vorteilhaft an der Außenseite des Wasserkanalkörpers bzw. des vorgenannten Deckels angeordnet sein, vorzugsweise an derselben Außenfläche wie die Beheizung. Er ist mittels der Anschlussvorrichtung elektrisch angeschlossen. Eine zusätzliche oder alternative Möglichkeit zur flächigen Temperaturmessung ist gemäß der DE 10 2015 218 120 A1, wie dies an sich bekannt ist. Besonders vorteilhaft ist ein diskreter Temperatursensor nahe am Kanalablauf oder sogar diesen überdeckend bzw. direkt am Kanalablauf angeordnet, wobei dieser Temperatursensor punktuell die Austrittstemperatur des Wassers erfassen kann. So kann beispielsweise bei einem Kaffeevollautomaten die Wassertemperatur genau geregelt werden, was für ein gutes Ergebnis bedeutsam ist. Ein weiterer Temperatursensor bzw. diskreter Temperatursensor kann in gleicher Art am Kanalzulauf angeordnet sein, damit bestimmt werden kann, welche Temperatur das zulaufende Wasser hat für eine Bestimmung der notwendigen Heizleistung für eine gewünschte Wassertemperatur am Kanalablauf.

In Ausgestaltung der Erfindung kann in Biegungen des Wasserkanals von mindestens oder genau 90°, insbesondere in Schleifen von 180°, seine Höhe an einer Außenkurve der Biegung um 20% bis 60% grösser sein als an einer Innenkurve der Biegung. So kann ein verstärkter und größerer Durchfluss außen an der Biegung im Vergleich zu innen an der Biegung erreicht werden. Damit kann eine zu hohe Temperatur bzw. eine ungleichmäßige Temperaturverteilung außen an den Biegungen vermieden werden. Die Höhe des Wasserkanals kann vorteilhaft gleichmäßig von der Außenkurve zur Innenkurve abnehmen.

In alternativer Ausgestaltung kann ein Querschnitt des Wasserkanals bzw. aller Wasserkanäle von einer Rechteckform abweichen, so dass die Wasserkanäle abschnittsweise oder insgesamt trapezförmigen Querschnitt aufweisen. Dabei ist ein trapezförmiger Querschnitt der Wasserkanäle hin zum Deckel bzw. zur Beheizung breiter, insbesondere um 200% bis 500% breiter, als an der gegenüberliegenden Seite. Die Seite hin zum Deckel bzw. zur Beheizung ist vorteilhaft die Basis des trapezförmigen Querschnitts. Eine Trapezform kann mit relativ flach angestellten Seiten ausgebildet sein, sodass eine maximale Breite des Wasserkanals zweimal bis fünfmal so groß ist wie eine Höhe. Ähnlich wie zuvor genannt kann ein trapezförmiger Querschnitt so ausgebildet sein, dass er nicht spiegelsymmetrisch ist, sondern dass in Biegungen des Wasserkanals die Seite an der Außenkurve steiler verläuft als die Seite an der Innenkurve, um wiederum einen verstärkten und größeren Durchfluss außen an der Biegung im Vergleich zu innen an der Biegung zu erreichen.

Das wasserführende Haushaltsgerät gemäß der Erfindung weist eine vorbeschriebene Heizvorrichtung auf, vorzugsweise an einer Rückseite eines Gerätegehäuses des Haushaltsgeräts. Die Heizvorrichtung kann auch innerhalb des Gerätegehäuses angeordnet sein. Sie kann insbesondere mit Längserstreckung der Heizvorrichtung in vertikaler Richtung angeordnet sein. Dabei kann vorteilhaft die Heizvorrichtung derart ausgebildet und angeordnet sein, dass der Kanalablauf höher liegt als der Kanalzulauf. Besonders vorteilhaft wird der Wasserkanal in Richtung vom Kanalzulauf zum Kanalablauf an keiner Stelle tiefer bzw. verläuft nach unten.

Diese und weitere Merkmale gehen außer aus den Ansprüchen auch aus der Beschreibung und den Zeichnungen hervor, wobei die einzelnen Merkmale jeweils für sich allein oder zu mehreren in Form von Unterkombinationen bei einer Ausführungsform der Erfindung und auf anderen Gebieten verwirklicht sein und vorteilhafte sowie für sich schutzfähige Ausführungen darstellen können, für die hier Schutz beansprucht wird. Die Unterteilung der Anmeldung in einzelne Abschnitte und Zwischen-Überschriften beschränkt die unter diesen gemachten Aussagen nicht in ihrer Allgemeingültigkeit.

### KURZBESCHREIBUNG DER ZEICHNUNGEN

Ein Ausführungsbeispiel der Erfindung ist in den Zeichnungen schematisch dargestellt und wird im Folgenden näher erläutert. In den Zeichnungen zeigen:
- Fig. 1: eine stark vereinfachte Darstellung eines erfindungsgemäßen Haushaltsgeräts in Rückansicht, wobei an einer Rückseite des Geräts eine erfindungsgemäße Heizvorrichtung vorgesehen ist,
- Fig. 2: eine Ansicht auf eine Stirnseite der gewölbten Heizvorrichtung,
- Fig. 3: eine Schrägdarstellung auf eine Unterseite der Heizvorrichtung mit den Wasserkanälen,
- Fig. 4: eine Draufsicht auf die Unterseite der Heizvorrichtung in planer Abwicklung,
- Fig. 5: eine vereinfachte Explosionsdarstellung der Heizvorrichtung und
- Fig. 6: Querschnitte durch einen Wasserkanal vor einer Biegung um 90°, mitten darin und dahinter.

### DETAILLIERTE BESCHREIBUNG DER AUSFÜHRUNGSBEISPIELE

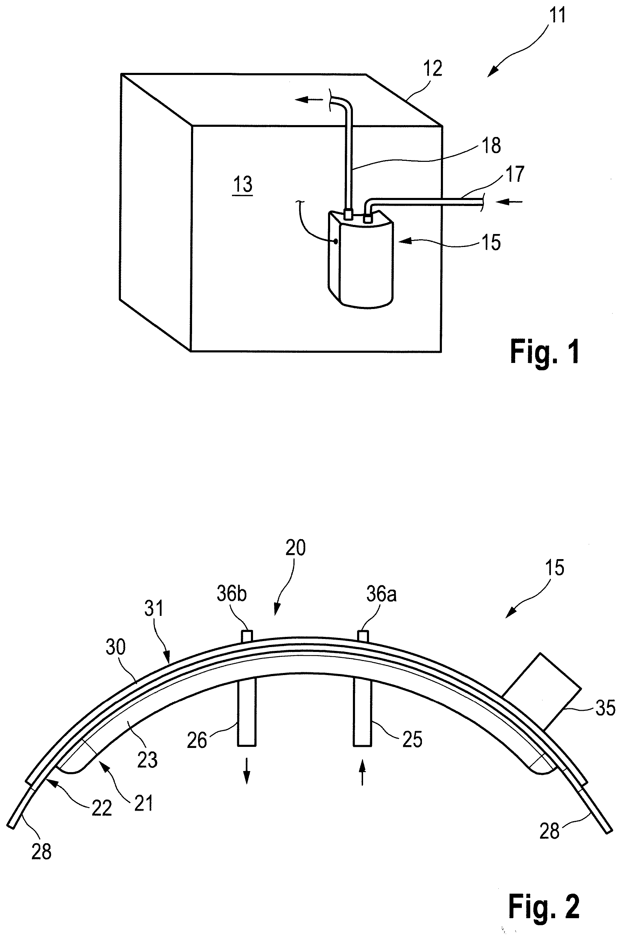

In der Fig. 1 ist ein erfindungsgemäßes Haushaltsgerät 11 dargestellt mit einem Gerätegehäuse 12. An einer Gehäuserückseite 13 ist die erfindungsgemäße Heizvorrichtung 15 angebracht mit einer Wasserzuleitung 17 und einer Wasserableitung 18, wobei vorteilhaft die Heizvorrichtung 15 ein eigenes Gehäuse aufweisen kann, das ihre funktionalen Teile bedeckt. Alternativ und bevorzugt kann die Heizvorrichtung 15 in dem Gerätegehäuse 12 angeordnet sein, wodurch sie geschützt ist. An der Wasserzuleitung 17 kommt kaltes Wasser in die Heizvorrichtung 15, entweder durch den Druck einer Wasserleitung in einem Gebäude oder mittels einer Pumpe. An der Wasserableitung 18 tritt warmes, heißes oder sehr heißes Wasser aus, ggf. sogar Dampf. Dieses erwärmte oder heiße Wasser kann dann im Haushaltsgerät 11 verwendet werden. Dies spielt für die Erfindung keine nennenswerte Rolle. Mit der Anschlussleitung 19 wird die Heizvorrichtung 15 elektrisch angeschlossen zur Ansteuerung bzw. Leistungsversorgung sowie zur Auswertung von Temperaturinformationen.

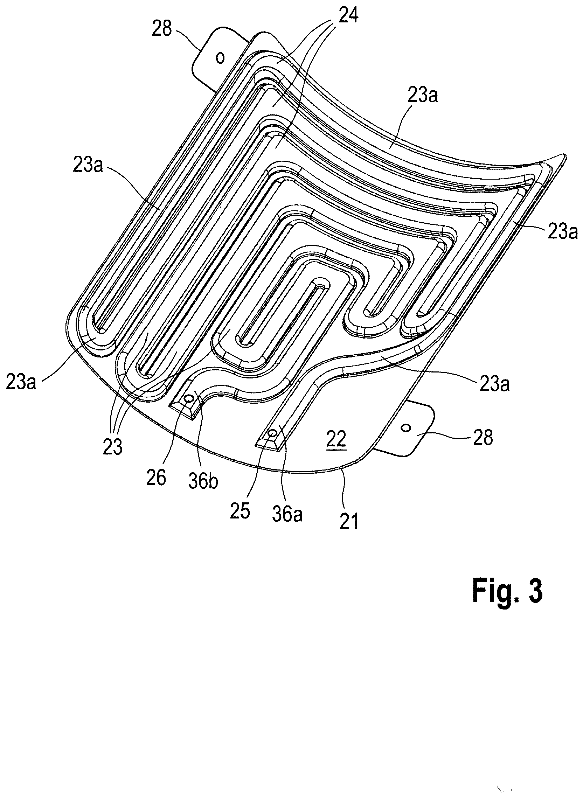

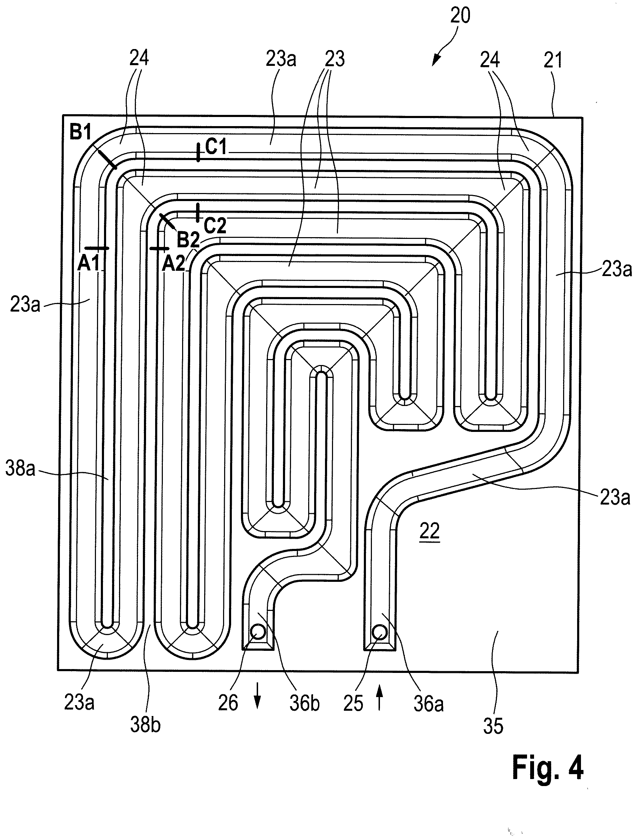

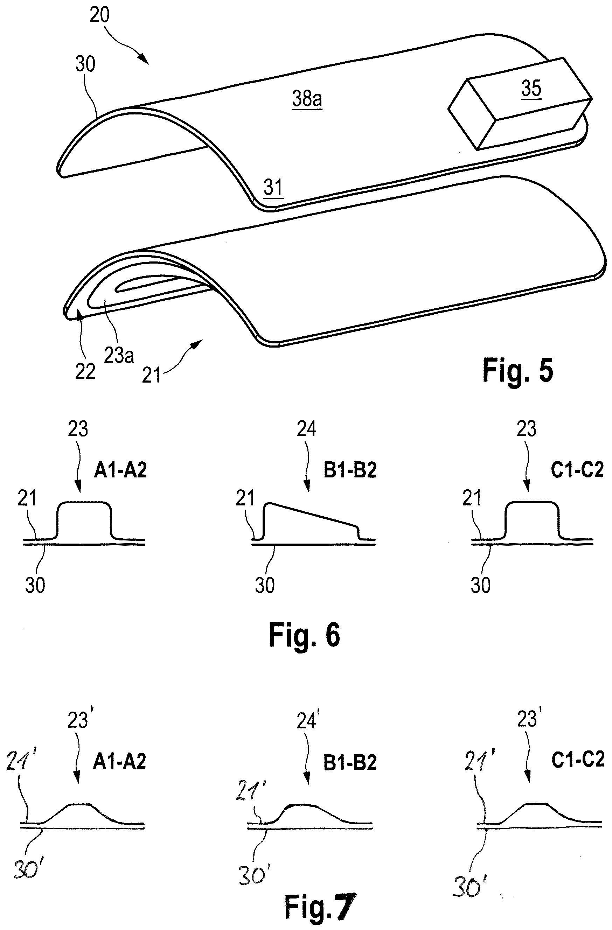

In der Fig. 3 ist die erfindungsgemäße Heizvorrichtung 15 in Schrägansicht von unten dargestellt, und in Fig. 4 eine Draufsicht auf die Unterseite der Heizvorrichtung 15 in planer Abwicklung bzw. Darstellung. Die Heizvorrichtung 15 besteht, wie die Explosionsdarstellung der Fig. 5 zeigt, aus einem unteren Wasserkanalkörper 20 mit Kanalkörperunterteil 21, auf das ein Deckel 30 aufgesetzt und dauerhaft befestigt ist. Insbesondere sind die beiden Teile miteinander verschweißt. Die Form ist rechteckig mit vier Außenrändern und abgerundeten Ecken.

Wie aus der Fig. 2 mit der Ansicht auf die Stirnseite sowie aus den folgenden Figuren hervorgeht, weist der Wasserkanalkörper 20 unten das Kanalkörperunterteil 21 mit einer Unterseite 22 auf, die sozusagen innerhalb der Wölbung liegt, welche besonders gut aus der Fig. 3 zu ersehen ist. An dieser Unterseite 22 stehen die Einprägungen als Wasserkanäle 23 hervor bzw. aus dieser heraus. Es ist erkennbar ein einziger durchgängiger Wasserkanal 23 vorgesehen, der in einzelnen Bahnen mit Biegungen und Schleifen mäanderförmig verläuft mit geraden Abschnitten, die durch die Biegungen und Schleifen verbunden sind. An den Kanalenden sind ein Kanalzulauf 25 und ein Kanalablauf 26 vorgesehen. Sie sind hier mit Öffnungen in die Einprägungen bzw. Wasserkanäle 23 versehen. Gem. Fig. 2 können an Kanalzulauf 25 und an Kanalablauf 26 Rohrstutzen für die vorgenannte Wasserzuleitung 17 und Wasserableitung 18 vorgesehen sein, die rechtwinklig von der Unterseite 22 abstehen oder in Längsrichtung weisen.

An den Kanalzulauf 25 schließt sich eine äußerste Bahn 23a des Wasserkanals an, die schräg zum rechten Außenrand des Kanalkörperunterteils 21 verläuft, und dann an diesem nach oben zum oberen Außenrand verläuft. An diesem verläuft sie nach einer Biegung weiter, und mit einer weiteren Biegung nahe an dem linken Außenrand bis zum vorderen Außenrand, in dessen Nähe Kanalzulauf 25 und ein Kanalablauf 26 vorgesehen sind. Hier mach die äußerste Bahn 23a des Wasserkanals eine Schleife um 180° und verläuft nach oben. Hinter dieser Schleife ist der Wasserkanal 23 nicht mehr die äußerste Bahn. Er verläuft dann sozusagen mäanderförmig und bedeckt eine Wasserkanalfläche, wobei er sich dem Mittelbereich nähert. Aus diesem läuft der Wasserkanal 23 heraus zum unteren Außenrand und zum Kanalablauf 26.

In der unteren Sicht der Fig. 2 ist auch ein oberer großer Heizbereich 38a dargestellt und gestrichelt umrandet sowie gestrichelt schraffiert, um ihn besser sichtbar zu machen. Er verläuft eindeutig innerhalb der äußersten Bahn 23a, wenn auch nur knapp. Links unten ist ein kleiner Heizbereich 38b gestrichelt umrandet sowie gestrichelt schraffiert, der unabhängig von dem Heizbereich 38a betrieben werden kann. So kann eine Heizleistung besser eingestellt werden, indem die Heizbereiche 38a und 38b einzeln oder gemeinsam betrieben werden.

Vor allem aus der Unteransicht der Fig. 2 ist deutlich zu erkennen, wie die äußerste Bahn 23a nicht beheizt wird, weil sie gerade knapp außerhalb der Heizbereiche 38a und 38b verläuft sowie außerhalb der anderen Bahnen des Wasserkanals 23, durch die heißes Wasser strömen kann. So werden zumindest drei Außenränder vor zu hohen Temperaturen geschützt.

Dadurch können beispielsweise die beiden Befestigungsabschnitte 28 nach Art abstehender Halteabschnitte kühler gehalten werden. So können sie unbedenklich an Befestigungspunkten aus Kunststoff beispielsweise hinten an der Gehäuserückseite 13 oder in einem eigenen Gehäuse der Heizvorrichtung 15 angeschraubt werden. Diese Befestigungsabschnitte 28 sind vorteilhaft an dem Kanalkörperunterteil 21 angeformt bzw. integral damit hergestellt.

Alle anderen Bahnen des Wasserkanals 23 bis auf den letzten Teil hin zum Kanalablauf 26 sind von den Heizbereichen 38a und 38b überdeckt. So kann ein guter und ggf. hoher Eintrag von Heizleistung in das Wasser erfolgen, das durch den Wasserkanal 23 fließt.

Die Ansicht der Fig. 2 auf die Stirnseite zeigt, dass die Heizvorrichtung 15 bzw. Wasserkanalkörper 20 der relativ dünn ist, also ihre Dicke im Verhältnis zur Breite und zur Länge relativ gering ist. Des Weiteren ist sie in den Randbereichen außerhalb des Wasserkanals 23 sehr dünn, dies entspricht der Wandstärke vom Kanalkörperunterteil 21 im Randbereich plus der Wandstärke des Deckels 30. Dieser Deckel 30 weist vorteilhaft überall dieselbe Materialstärke auf, die bei 1 mm oder bei 2 mm liegen kann. Kanalkörperunterteil 21 und Deckel 30 bestehen vorteilhaft aus Edelstahl. Der Kanalkörperunterteil 21 ist vorteilhaft durch eine Platine aus Edelstahl gebildet, die in einer Stufe oder in zwei Stufen sowohl geprägt wird zum Einbringen bzw. Erzeugen des Wasserkanals 23 als auch gebogen wird in die gebogene bzw. gewölbte Form entsprechend der Fig. 3. Die reine Materialwandstärke kann also zwischen dem etwas dickeren Randbereich und der etwas dünneren Wandstärke am Wasserkanal 23 variieren.

Der Deckel 30 weist eine Oberseite 31 auf, die im Wesentlichen von einem Heizleiterbereich mit den Heizbereichen 38a und 38b bedeckt ist. Dieser Heizleiterbereich wird im Wesentlichen von nicht näher dargestellten Heizleitern überdeckt bzw. gebildet. Diese Heizleiter können in parallelen Streifen oder in Mäanderform verlaufen. Es ist sogar möglich, dass ein länglicher Heizleiter genau oberhalb des Wasserkanals 23 verläuft wo dieser beheizt werden soll, so dass er darin entlangströmendes Wasser möglichst gut und möglichst direkt beheizen kann.

Vorteilhafte Ausgestaltungen für die Heizleiter der Heizbereiche 38a und 38b können mehrere parallel zueinander verlaufende Heizleiter sein, die auch elektrisch parallel geschaltet sind. Die Heizleiter könnten auch in mehr als zwei unterschiedlichen Heizbereichen vorliegen, die entweder flächenmäßig getrennt sind oder ineinander sozusagen verwoben sind. So kann eine lokal unterschiedliche Beheizung des Wassers erreicht werden, ebenso auch eine mit unterschiedlichen Leistungen und somit unterschiedlichen Temperaturen. Die Heizleiter können auch in Gitterform vorliegen, alternativ können sie vollflächig ausgebildet sein. Auf mögliche Ausgestaltungen der Heizleiter wird verwiesen, wie sie aus den WO 2021/170232 A1 oder der WO 2021/170331 A1 bekannt sind.

Die Heizleiter der Heizbereiche 38a und 38b sind vorteilhaft in Dickschichttechnik hergestellt. Sie können direkt oder mit Anschlussbahnen auf bekannte Art und Weise an eine Anschlussvorrichtung 35 geführt sein, die hier sehr vereinfacht dargestellt ist. Sie ist bevorzugt ein Steckanschluss und kann auf der Oberseite 31 des Deckels 30 befestigt sein, beispielsweise mit Metallfüßen, die insbesondere an Kontaktfeldern festgeschweißt sind. Die Anschlussvorrichtung 35 ist erkennbar außerhalb der Heizbereiche 38a und 38b angeordnet. Des Weiteren wird sie durch die äußerste Bahn 23a gekühlt bzw. vor zu hohen Temperaturen geschützt.

Aus den Fig. 2 bis Fig. 4 ist zu erkennen, dass einerseits nahe bzw. direkt am Kanalzulauf 25 ein Temperatursensor 36a vorgesehen ist, und zwar direkt über dem Wasserkanal 23 kurz vor dem Kanalzulauf 25. Andererseits ist nahe am bzw. kurz vor dem Kanalablauf 26 ein weiterer Temperatursensor 36b vorgesehen, nämlich auch direkt über dem Wasserkanal 23. Diese Temperatursensoren 36 sind mit Anschlussbahnen mit der Anschlussvorrichtung 35 verbunden. Sie sind vorteilhaft auf bekannte Weise als NTC-Temperatursensoren ausgebildet.

Die Fig. 6 zeigt drei Schnitte A1-A2, B1-B2 und C1-C2 durch den Wasserkanal 23, und zwar gemäß der Fig 4 an der zweitäußersten Bahn des Wasserkanals 23 von außen. Der Schnitt A1-A2 ist kurz vor der Biegung um 90°, er zeigt einen angenähert rechteckigen Querschnitt bzw. Durchflussquerschnitt. Die Höhe des Wasserkanals 23 ist hier insbesondere nahezu konstant. Der Schnitt C1-C2 ist kurz hinter der Biegung um 90°, er zeigt ebenfalls einen angenähert rechteckigen Querschnitt mit nahezu konstanter Höhe des Wasserkanals 23. Er entspricht genau dem Querschnitt von Schnitt A1-A2.

Am Schnitt B1-B2 dagegen ist der Querschnitt deutlich breiter, aber vor allem ist die Höhe des Wasserkanals außen in der Biegung, also bei B1, deutlich höher als innen in der Biegung bei B2. Er kann hier etwa 50% höher sein. Dadurch ergibt sich ein Verlagern des durchfließenden Wassers bzw. der Wasserdurchströmung vor allem in den Außenbereich der Biegung hinein, wodurch hier mehr Wärme abgenommen werden kann. So kann eine insgesamt homogenere Wärmeverteilung und damit auch ein besseres bzw. effizienteres Aufheizen von Wasser erreicht werden.

In allgemeiner alternative Ausgestaltung der Wasserkanäle 23 kann ein Querschnitt etwas von der Rechteckform entsprechend der Schnitte A1-A2 und C1-C2 der Fig. 6 abweichen, insbesondere können die Wasserkanäle abschnittsweise oder insgesamt trapezförmigen Querschnitt aufweisen. Dabei ist der Querschnitt der Wasserkanäle 23' vom Kanalkörperunterteil 21' hin zum Deckel 30' breiter, insbesondere um 200% bis 500%, breiter als an der gegenüberliegenden Seite. Dies zeigt die Fig. 7 in Anlehnung an die Fig. 6, wiederum mit den drei Schnitten A1-A2, B1-B2 und C1-C2 an denselben Stellen wie zuvor, also am Wasserkanal 23'und an der Biegung 24'. Die Schnitte A1-A2 und C1-C2 sind identisch, das Trapez ist spiegelsymmetrisch. Der Schnitt B1-B2 in der Biegung 24' ist etwas anders geformt, hier ist das Trapez sozusagen nach links verschoben, also zum Außenbereich der Biegung 24' hin. Dadurch ergibt sich wiederum ein Verlagern des durchfließenden Wassers vor allem in den Außenbereich der Biegung 24' hinein, wodurch hier mehr Wärme abgenommen werden kann.

Allgemein kann die Ausgestaltung der Querschnitte der Wasserkanäle, insbesondere auch in den Biegungen, leicht durch eine entsprechende Stanzform in das Kanalkörperunterteil hinein in bestimmten Grenzen frei bestimmt und erreicht werden.

## Patentansprüche

1. Heizvorrichtung für Wasser mit:
- einem Wasserkanalkörper mit mindestens einem länglichen Wasserkanal darin, wobei der mindestens eine Wasserkanal nach außen abgedichtet ist und nur durch einen Kanalzulauf und einen Kanalablauf zugänglich ist,
- einer Beheizung an einer Außenfläche des Wasserkanalkörpers zum Aufheizen von durch den Wasserkanal strömendem Wasser,
wobei
- der Wasserkanalkörper als rechteckige Platte mit einem Außenrand ausgebildet ist, vorzugsweise mit geringer Dicke relativ zu der Länge der Außenseiten,
- der Wasserkanal an einem Ende den Kanalzulauf und an einem anderen Ende den Kanalablauf aufweist,
- wobei der Wasserkanal zwischen Kanalzulauf und Kanalablauf in Bahnen verlaufend eine Wasserkanalfläche überdeckt bzw. in Bahnen über eine Wasserkanalfläche verteilt verläuft,
- der Kanalzulauf und der Kanalablauf an einem Randbereich der Wasserkanalfläche angeordnet sind,
**dadurch gekennzeichnet, dass**
- der Wasserkanal am Kanalzulauf beginnend eine äußere Bahn bildet, die an oder entlang von mindestens zwei Außenrändern des Wasserkanalkörpers verläuft bzw. als äußerste Bahn entlang dieser zwei Außenränder des Wasserkanalkörpers zwischen dem Außenrand des Wasserkanalkörpers und den übrigen Bahnen des Wasserkanals verläuft.

2. Heizvorrichtung nach Anspruch 1, **dadurch gekennzeichnet, dass** der Randbereich der Wasserkanalfläche an oder entlang von mindestens drei Außenrändern verläuft, insbesondere entlang des Außenrands des Wasserkanalkörpers verläuft.

3. Heizvorrichtung nach Anspruch 1 oder 2, **dadurch gekennzeichnet, dass** der Wasserkanal an diesen mindestens zwei Außenrändern des Wasserkanalkörpers an mehr als 80% von deren jeweiliger Außenrandlänge entlang läuft, insbesondere an mehr als 90% von deren jeweiliger Außenrandlänge entlang läuft.

4. Heizvorrichtung nach einem der vorhergehenden Ansprüche, **dadurch gekennzeichnet, dass** die Wasserkanalfläche entlang von einem Außenrand des Wasserkanalkörpers oder entlang von mindestens zwei Außenrändern des Wasserkanalkörpers die Beheizung bereichsweise überragt, wobei in den überragenden Bereichen der Wasserkanalfläche eine Bahn des Wasserkanals als äußerste Bahn ohne Überdeckung der Beheizung verläuft.

5. Heizvorrichtung nach einem der vorhergehenden Ansprüche, **dadurch gekennzeichnet, dass** der Wasserkanal mäanderförmig in parallelen Schleifen verläuft, wobei jede Schleife an ihrem Ende eine Wendung des Wasserkanals um etwa 180° aufweist.

6. Heizvorrichtung nach einem der vorhergehenden Ansprüche, **dadurch gekennzeichnet, dass** der Wasserkanal derart verläuft, dass ein direkt zu dem Kanalablauf führender Wasserkanalabschnitt aus dem Mittelbereich des Wasserkanalkörpers kommt.

7. Heizvorrichtung nach einem der vorhergehenden Ansprüche, **dadurch gekennzeichnet, dass** die Beheizung durch mindestens einen Dickschicht-Heizleiter gebildet ist, vorzugsweise durch mehrere Dickschicht-Heizleiter, wobei mehr als die Hälfte der Dickschicht-Heizleiter eine Breite quer zur Stromflussrichtung aufweist, die größer ist als eine Länge der Dickschicht-Heizleiter entlang der Stromflussrichtung, wobei insbesondere mehrere Dickschicht-Heizleiter eine durchgehende zusammenhängende Fläche aus Heizleitermaterial aufweisen und diese Fläche durch längliche Kontaktleitungen in mehrere einzelne Dickschicht-Heizleiter unterteilt ist .

8. Heizvorrichtung nach einem der vorhergehenden Ansprüche, **dadurch gekennzeichnet, dass** die Beheizung an einer nach außen weisenden Außenfläche des Wasserkanalkörpers vorgesehen ist, wobei vorzugsweise der mindestens eine Heizleiter oder sämtliche Heizleiter der Beheizung mindestens 50 % der Fläche des Wasserkanalkörpers bedecken, wobei insbesondere die Beheizung an einer Außenfläche des Wasserkanalkörpers flächig verteilt ist durch eine weitgehend flächig geschlossene Ausgestaltung mindestens eines Heizleiters oder durch einen eine größere Fläche partiell bedeckenden Verlauf mindestens eines länglichen Heizleiters oder mehrerer paralleler Heizleiter.

9. Heizvorrichtung nach einem der vorhergehenden Ansprüche, **dadurch gekennzeichnet, dass** der Kanalzulauf und der Kanalablauf an derselben Seite nahe dem oder an dem Außenrand des Wasserkanalkörpers angeordnet bzw. an demselben Randbereich nebeneinander angeordnet sind, wobei vorzugsweise zwischen dem Kanalzulauf und einem an diesen Außenrand angrenzenden Außenrand kein Wasserkanal verläuft und zwischen dem Kanalablauf und dem anderen an diesen Außenrand angrenzenden Außenrand mindestens ein Wasserkanal oder mindestens eine Schleife des Wasserkanals angeordnet ist.

10. Heizvorrichtung nach einem der vorhergehenden Ansprüche, **dadurch gekennzeichnet, dass** der Kanalzulauf und der Kanalablauf durch eine Außenfläche des Wasserkanalkörpers hindurch vorgesehen sind, insbesondere die Außenfläche, an der der Wasserkanal ausgebildet ist, wobei vorzugsweise Rohrstutzen als Kanalzulauf und als Kanalablauf vorgesehen sind, die an einem Kanalkörperunterteil angesetzt sind und davon abstehen, insbesondere beiden gemeinsam an einem Teil ausgebildet sind.

11. Heizvorrichtung nach einem der vorhergehenden Ansprüche, **dadurch gekennzeichnet**, der Wasserkanalkörper ein Kanalkörperunterteil und einen darauf aufgebrachten Deckel aufweist, wobei der Wasserkanal in dem Kanalkörperunterteil als längliche durchgehende Vertiefung ausgebildet ist, wobei der Deckel auf den Wasserkanalkörper aufgesetzt ist und den mindestens einen Wasserkanal überdeckt und vorzugsweise entlang seiner Länge abdichtet, wobei der Deckel die Beheizung mit dem mindestens einen Heizleiter aufweist und die Beheizung an dem Deckel flächig verteilt ist.

12. Heizvorrichtung nach einem der vorhergehenden Ansprüche, **dadurch gekennzeichnet, dass** der Wasserkanalkörper in eine gewölbte Form gebogen worden ist oder durch Tiefziehen in der gewölbten Form hergestellt worden ist, wobei insbesondere der mindestens eine Wasserkanal gleichzeitig, vor oder nach einem Biegen einer ebenen Platine in die gewölbte Form der Platte ausgebildet worden ist.

13. Heizvorrichtung nach einem der vorhergehenden Ansprüche, **dadurch gekennzeichnet, dass** eine elektrische Anschlussvorrichtung an die Beheizung vorgesehen ist, insbesondere an der Außenfläche des Wasserkanalkörpers, vorzugsweise als daran befestigter Steckanschluss, wobei insbesondere mindestens ein diskreter Temperatursensor an der Außenfläche des Wasserkanalkörpers angeordnet ist und mittels der Anschlussvorrichtung elektrisch angeschlossen ist, wobei insbesondere die elektrische Anschlussvorrichtung nahe einem Außenrand in einem Eckbereich des Wasserkanalkörpers angeordnet ist, an den auch der Außenrand des Wasserkanalkörpers mit dem Kanalzulauf daran angrenzt, wobei vorzugsweise ein direkt an den Kanalzulauf anschließender Wasserkanalabschnitt entlang der elektrischen Anschlussvorrichtung verläuft, wobei die elektrische Anschlussvorrichtung diesen Wasserkanalabschnitt nicht überdeckt.

14. Heizvorrichtung nach einem der vorhergehenden Ansprüche, **dadurch gekennzeichnet, dass** in Biegungen von mindestens 90°, insbesondere in Schleifen von 180°, eine Höhe des Wasserkanals an einer Außenkurve der Biegung um 20% bis 60% grösser ist als an einer Innenkurve der Biegung, wobei vorzugsweise die Höhe des Wasserkanals gleichmäßig abnimmt von der Außenkurve zur Innenkurve.

15. Wasserführendes Haushaltsgerät mit einer Heizvorrichtung nach einem der vorhergehenden Ansprüche und mit einem Gerätegehäuse, wobei vorzugsweise die Heizvorrichtung innen oder außen an einer Rückseite des Gerätegehäuses des Haushaltsgeräts angeordnet ist, insbesondere mit Längserstreckung in vertikaler Richtung.
